# EUROPEAN PATENT APPLICATION

(11) **EP 2 000 949 A2**
(43) Date of publication of application: **10.12.2008**
(21) Application number: 08251902.6
(22) Date of filing: 30.05.2008
(51) Int. Cl.: G06K 7/00

(54) **Card connector**

(30) Priority: 08.06.2007 SG 200704178
(71) Applicant: MEA Technologies Pte., Ltd., Singapore 609930 (SG)
(72) Inventor: Hong, Fan Shin, c/o Mea Tech. Pte. Ltd., Singapore 609930 (SG); Liong, Weng Heng, c/o Mea Tech. Pte. Ltd., Singapore 609930 (SG)
(74) Representative: DeVile, Jonathan Mark

(57) **Abstract**

A card connector 1 has: a connector housing 2 constituted of electrical insulators and capable of housing cards inside a bottomed card holding cavity which is formed therein so as to be enclosed on three sides by an opposed pair of first and second frames and a third frame that links the end portions of the first and second frames, and so as to be open at the front and top. Contact terminals 5 and 6 are deposed inside the connector housing's card holding cavity. An open-close cover 3 covers the open portions of the connector housing's card holding cavity. The open-close cover has, at the front thereof where the card is installed, a sensing member that senses the installation status of the card. The rear of the open-close cover is rotatably pivoted on the first and second frames. After a card is installed inside the card holding cavity, the card's installation status is sensed by closing the open-close cover and positioning the sensing member of the open-close cover at the rear end portion of the card. The card connector is therefore arranged such that, when installing a card it is possible to examine the part where the card is installed, so that a card connector is provided in which cards of differing size and thickness, etc., can be installed reliably and in a simple manner.

## Description

### BACKGROUND

### 1. Technical Field

The present invention relates to card connectors having a connector housing, contact terminals and an open - closer that opens portions of the connector housing and holding cavity.

Embodiments of the present invention can provide card connectors that are installed and used in various electronic equipment such as personal computers and portable terminals. More particularly, embodiments of the present invention can provide card connectors into which small-size cards such as memory cards of differing outer-dimension size and thickness can be inserted.

### 2. Related Art

Installed in various electronic equipment such as personal computers and portable terminals, card connectors have been used for insertion of small-size cards, etc., with built-in CPU or memory IC, etc., such as micro MMCs (multi media cards) or micro SD (super density) cards, so as to expand the capabilities of such equipment.

A typical example of such a card connector is set forth in JP-A-2003-197296. This card connector has a connector housing with a card insertion aperture at the front and a card holding cavity inside, and multiple contact terminals that are fitted in the inner part of the card holding cavity; the structure is such that two card types of differing size and thickness can be inserted through the insertion aperture. Also, a card sensing switch is provided in the housing, and the installation status of each card type can be sensed.

Another typical example of a card connector is set forth in US Patent No. 6,642,614. This connector has a connector housing provided with a card holding cavity whose front and top are open; multiple contact terminals that are fitted in the inner part of the card holding cavity; and a covering that covers the top opening of the connector housing; the structure is such that two card types of differing size and thickness can be inserted through the front opening.

According to these connectors, an insertion aperture is formed in the front of the connector housing, two card types of differing size and thickness can be inserted through the insertion aperture, and the cards' contacts are electrically connected to the connector's contact terminals.

However, with each of these card connectors, when assembled it is not possible to examine the internal structure of the card holding cavity, such as the shape of the holding cavity and the contact terminal array status, through the insertion aperture. Hence, a user inserting a card into the insertion aperture will consult the written instructions or procedure, etc., printed on the card and insert the card into the insertion aperture in accordance with such instructions. But such consultation operation is troublesome and annoying, so that sometimes the card will be inserted without performing such consultation; if such insertion is stopped mid-way, the card will be pulled out from the insertion aperture so as to invert its directional or obverse-reverse face orientation, then reinserted for another try. Failure to effect adequate connection via such insertion will entail a further insertion operation with the card turned the other way around, etc. Such connection work will be troublesome and annoying, and what is more, forcibly carrying out such inappropriate insertion could damage or break either the connector or the card. Concerning this, the connector set forth in JP-A-2003-197296 is provided with a sensing switch that senses the card installation status, and is therefore able to sense adequate installation status. But the above trial-and-error connection operations will still have to be carried out until adequate installation is effected, which means that the above problems will remain. Also, the card connector set forth in US Patent No. 6,642, 614, although facilitating formation of the card holding cavity by having the top opening covered by a covering, has the same problems in the assembled state, because the covering is joined to the connector housing by means of bonding agent or the like.

Also, these card connectors are common connectors that are used with cards of differing thickness, which means that the distance between the contacts of the various cards and the connector's contact terminals will vary with the difference in thickness. As a result, when the resilience of the contact terminals has been adjusted to match a thick card, it will not be possible to impart the requisite resilience to the contact terminals with a thin card; and conversely, when the resilience of the contact terminals has been adjusted to match a thin card, then with a thick card the contact terminals will be excessively displaced, exceed their stress limit, and undergo plastic deformation.

Further, where not only the thickness but also the size, that is, the outer dimensions of the cards differs, the card holding cavity is formed to a size that matches large-sized, thick cards. Consequently, when a small-sized, thin card is housed in the card holding cavity, which is suited for a large-sized card, gaps equivalent to the differences in the size and thickness of the two card types will occur inside the card holding cavity. Because of this, the small-sized, thin card will be housed in an unstable condition inside the card holding cavity, and will move readily if some impact acts on the connector, possibly resulting in poor connection between the card and connector, and hence in failure.

### SUMMARY

An advantage of some aspects of the present invention is to provide a card connector which permits the interior of the card holding cavity to be examined when a card is housed therein, and into which cards of differing size and thickness can be installed more reliably, in a more simple manner, and with card misinstallations eliminated or at least reduced.

A card connector of the present invention includes: a connector housing constituted of electrical insulators and capable of housing cards inside a bottomed card holding cavity which is formed therein so as to be enclosed on three sides by an opposed pair of first and second frames and a third frame that links the end portions of the first and second frames, and so as to be open at the front and top; contact terminals that are deposed inside the connector housing's card holding cavity; and an open-close cover that covers the open portions of the connector housing's card holding cavity. The card connector has the features that: the open-close cover has, at the front thereof where the card is installed, a sensing member that senses the installation status of the card; the rear of the open-close cover is rotatably pivoted on the first and second frames; and after a card is installed inside the card holding cavity, the card's installation status is sensed by closing the open-close cover and positioning the sensing member of the open-close cover at the rear end portion of the card.

The card holding cavity may be formed in a shape that permits cards of differing size and thickness to be housed therein, the contact terminals that contact with the contacts of such cards being installed inside the card housing cavity.

The card holding cavity may be formed in a shape that permits a first and a second card type of differing size and thickness to be housed therein, with the contact terminals including first and second contact terminals that are provided inside the card holding cavity and contact with the contacts of the first and second card types respectively.

Such first contact terminals may be fixed to the third frame of the connector housing, and such second contact terminals be fixed to the bottom of the connector housing.

The open-close cover may be formed from metal plates including a pair of first and second sideplates that cover the outer side surfaces of the first and second frames, a top plate that links the top edges of the sideplates and covers the upper opening of the card holding cavity, and a front cover plate that covers the front opening of the card holding cavity, with the front cover plate serving as the sensing member.

Either the first or the second frame of the connector housing may be provided with a first switch means that senses the installation status of the card, and with a second switch means that senses the open/closed status of the open-close cover.

Such first switch means may be composed of a first fixed contact terminal having a fixed contact, and a first movable contact terminal having a movable contact that contacts and separates from the fixed contact, together with an actuating part that separates the movable contact from the fixed contact as a card is installed; and such second switch means may be composed of a second fixed contact terminal having a fixed contact, and a second movable contact terminal having a movable contact that contacts and separates from the fixed contact, together with an actuating protrusion that separates the movable contact from the fixed contact in interlock with opening/closing manipulation of the open-close cover.

The actuating protrusion of such second movable contact terminal may, in interlock with closing manipulation of the open-close cover, cause the second switch means to execute a series of OFF-ON-OFF operations; in the final OFF state, the actuating protrusion will be latched into a latching hole provided in the frame, thereby locking the open-close cover in the closed state.

An aperture portion for insertion of the leading end of the first card type, which is long compared to the second card type, may be formed in the third frame; so that as a first card type is installed, the leading end of the first card type will be inserted into such aperture and thereby be positioned and secured.

Thanks to the above structures, the present invention yields the excellent advantages that will now be described. According to some aspects of the invention, the open-close cover of a card connector is opened when a card is installed, so that, in this opened state, the interior of the card holding cavity can be examined. Thus, when a card is installed, it is possible to check the shape of the card being installed and the position of the contacts thereof with the shape of the card holding cavity and the contact terminal array, and to install the card after such checking, so that the card can be installed in a simple, reliable manner, with misinstallations eliminated. Also, when a card is installed, should the card being installed not be inserted up to the regular position, the sensing member will strike against the trailing end portion of the card so that closing of the cover will not be possible, and incomplete connection of the connector and card will thereby be eliminated.

According to a preferred mode of the invention, the card holding cavity is formed in a shape that can hold cards of differing size and thickness, and moreover, contact terminals for contacting with the cards' contacts are installed inside the card holding cavity, so that the card connector can be used as a common connector for multiple card types of differing size and thickness.

According to another preferred mode of the invention, the card connector can be used for two card types of differing size and thickness, for example, for micro SD cards and micro MM cards.

According to another preferred mode of the invention, the open-close cover is formed from metal plates including a pair of first and second sideplates that cover the outer side surfaces of the first and second frame, a top plate that links the top edges of the sideplates and covers the upper opening of the card holding cavity, and a front cover plate that covers the front opening of the card holding cavity, with the front cover plate serving as the sensing member; thanks to which, the open-close cover can be manufactured in a simple manner, by punching out plate metal of the requisite thickness and performing metal plate processing thereon. Since the front cover plate serves as the sensing member and the front opening of the card holding cavity will be covered over when the open-close cover is close, entry of dust or the like into the card holding cavity interior will be prevented or at least reduced, and a stable connected state can be maintained. What is more, because it is formed of metal plates, the open-close cover will, when installed to the connector housing, electromagnetically shield the connector.

According to another preferred mode of the invention, thanks to a first switch means, whether or not a card has been installed in the regular state can be sensed in a simple manner, and thanks to a second switch means, the open/closed status of the open-close cover can be sensed; as a result, it is possible to proactively prevent incomplete installation of the card and incomplete closing of the open-close cover.

According to another preferred mode of the invention, thanks to a second switch means, the open/closed status of the open-close cover can be sensed, and moreover, the open-close cover can be locked.

According to another preferred mode of the invention, when a first card type is installed, the leading end of the first card type will be inserted into an aperture portion formed in the third frame and thereby be positioned and secured. Thus, since the first card type will be positioned via positioning by the guide member, as well as via insertion into this aperture portion, the card will be accurately positioned and secured inside the card holding cavity.

### BRIEF DESCRIPTION OF THE DRAWINGS

The invention will be described, by way of example only with reference to the accompanying drawings, wherein like numerals reference like elements.
Fig. 1 is a general view of a card connector of an embodiment of the present invention, illustrating the mode of use thereof.
Fig. 2 is a cross-sectional view of the card connector in Fig. 1, along line II - II therein.
Fig. 3 illustrates the connector housing, Fig. 3A being a plan view, and Fig. 3B a perspective view.
Fig. 4 illustrates the connector housing, Fig. 4A being a perspective view of the housing in Fig. 3B from another angle, and Fig. 4B being a rear view.
Fig. 5 is a perspective view of the open-close cover.
Fig. 6 is a perspective view of the shield cover.
Fig. 7 illustrates a pair of contact terminals, Fig. 7A being a perspective view of a first contact terminal, and Fig. 7B being a perspective view of a second contact terminal.
Fig. 8 illustrates a first switch member, Fig. 8A being a perspective view of a movable contact terminal, and Fig. 8B being a perspective view of a fixed contact terminal.
Fig. 9 illustrates a second switch member, Fig. 9A being a perspective view of a movable contact terminal, and Fig. 9B being a perspective view of a fixed contact terminal.
Fig. 10 illustrates fitting tabs, Fig. 10A being a perspective view of a left fitting tab, and Fig. 10B being a perspective view of a right fitting tab.
Fig. 11 explicates the closing manipulation of the open-close cover, Fig. 11A being a perspective view, and Fig. 11B being side views of portion XIB in Fig. 11A.
Fig. 12 explicates the card connector in the state where a card is installed therein, Fig. 12A being a perspective view, Fig. 12B being a cross-sectional view along line XII - XII in Fig. 12A, Fig. 12C being a cross-sectional view along line XII - XII in Fig. 12A in the state where a micro SD card is installed, and Fig. 12D being a cross-sectional view along line XII - XII in Fig. 12A in the state where a micro MM card is installed.

### DESCRIPTION OF EXEMPLARY EMBODIMENT

An exemplary embodiment of the present invention will now be described with reference to the accompanying drawings. It should be borne in mind however, that the following embodiment is merely an example of a card connector that realizes the technical concepts of the invention. The embodiment is not intended to limit the invention to this particular card connector. The invention can equally well be adapted to yield other embodiments contained within the scope of the claims.

### First Embodiment

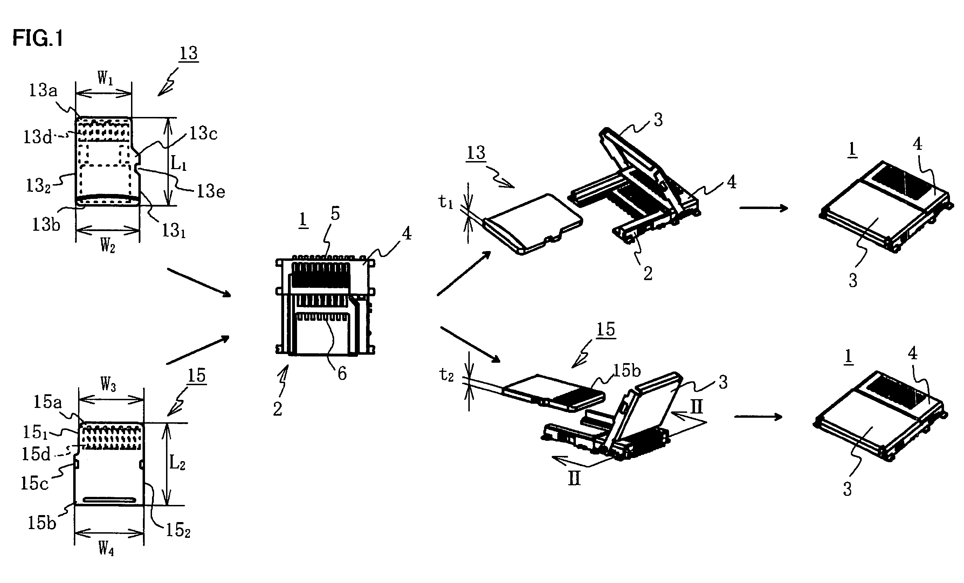

As shown in Fig. 1, a card connector (below, "connector") 1 is used with two types of card, a first type and a second type, that differ slightly in size and thickness, for instance a micro SD (super density) card 13 and a micro MM (multi media) card 15. Accordingly, outline descriptions of these cards will first be given.

The micro SD card 13 includes a rectangular plate-like body having longitudinal length L₁, widths W₁ and W₂ at the forward and rear end portions 13a and 13b (W₁ < W₂), and thickness t₁. The interior thereof contains an IC chip, while the outer periphery is formed from a molding of electrically insulative synthetic resin. On one of the side edges (the first side edge) 13₁ of this micro SD card 13 there are provided a positioning protrusion 13c and a latching indent 13e, while the other side edge 132 is a straight line. On the obverse face of the micro SD card 13 there are provided multiple contacts 13d that are connected to the IC chip in the interior.

The micro MM card 15 has almost the same shape as the micro SD card 13, including a molding having longitudinal length L₂, widths W₃ and W₄ at the forward and rear end portions 15a and 15b (W₃ < W₄), and thickness t₂. The micro MM card 15 too has a positioning protrusion 15c provided in one of the side edges (the first side edge) 15₁, the other side edge (the second side edge) 15₂ being a straight line, and has multiple contacts 15d provided on its obverse face. Moreover, the contacts 13d, 15d are provided on the reverse sides of the cards 13, 15 shown in Fig. 1, being indicated by dashed lines therein. The relations between the widths, lengths and thicknesses of these micro SD and micro MM cards 13, 15 are: W₃ > W₁, L₁ > L₂, and t₂ > t₁.

The connector 1 has: a connector housing (below, the "housing") 2 with a card holding cavity 24 in which the micro SD or micro MM card 13, 15 are installed; first and second contact terminals 5, 6 that are housed in the housing 2 and are electrically connected to the contacts 13d, 15d of the respective card; and an open-close cover 3 and shield cover 4 which are mounted on top of the housing 2.

There follow descriptions of the structures of the housing 2, the open-close cover 3, the shield cover 4, and the first and second contact terminals 5, 6.

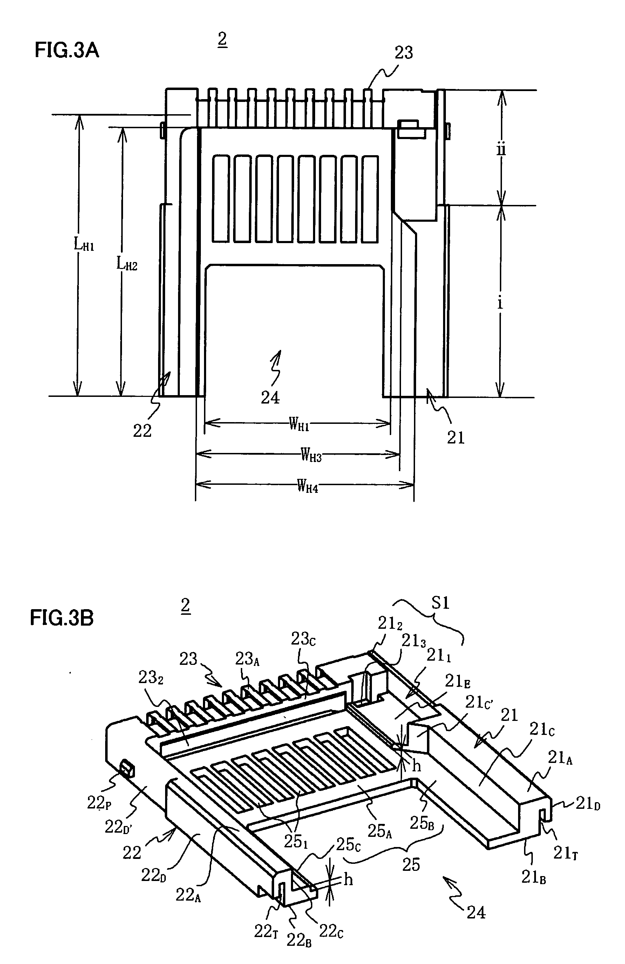

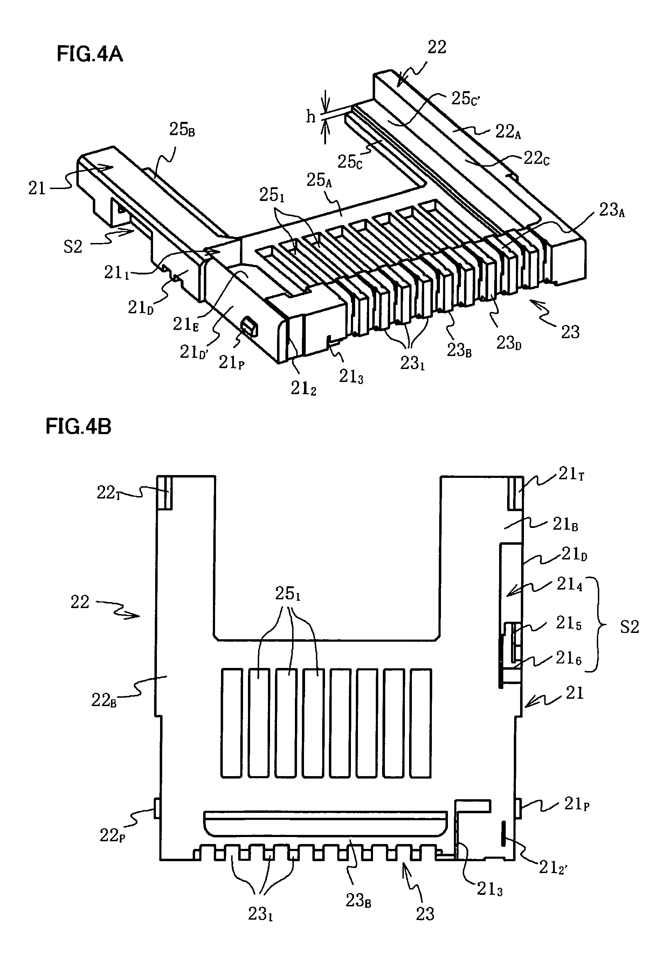

Figs. 3 and 4 give perspective views of the housing 2 seen from different angles, to facilitate comprehension of the structure of the housing 2. The housing 2 is formed as an electrically insulative synthetic resin molding, which is surrounded by an opposed pair of first and second frames 21, 22 and a third frame that links the end portions of the first and second frames 21, 22, and which has a shallow-bottomed card holding cavity 24 that is open on three sides - the front, the top, and part of the bottom. The upper surface of the housing 2 is partitioned, part-way along from the front end toward the rear, into two: an open-close cover mounting part i toward the front, that is covered by the open-close cover 3, and a shield cover mounting part ii toward the rear, where the shield cover 4 is mounted.

The pair of first and second frames 21, 22 are provided so as to have a spacing therebetween slightly larger than the larger width W₄ of the micro MM card 15, have a length slightly longer than the length L₁ of the longer micro SD card 13, and are formed as square pillar-like bodies of a particular thickness. More precisely, as shown in Figs. 3B and 4A, the first frame 21 is formed as a square-pillar body having obverse and reverse wall faces 21_{A}, 21_{B} and inner and outer wall faces 21c, 21_{D}. Likewise, the second frame 22 is formed as a square-pillar body having obverse and reverse wall faces 22_{A}, 22_{B} and inner and outer wall faces 22c, 22_{D}. Further, the third frame 23 too is formed as a square-pillar body of a particular thickness, which has obverse and reverse wall faces 23_{A}, 23_{B} and inner and outer wall faces 23c, 23_{D}.

The first frame 21 is a little thicker than the second frame 22, and as shown in Figs. 3B and 4B, is provided with first and second switch mounting portions S1, S2 at two locations, toward the front and the rear. A switch member for sensing the installation status of the micro SD and micro MM cards 13, 15 is fitted into the first switch mounting portion S1, and a switch member for sensing the open-closed status of the open-close cover 3 is fitted into the second switch mounting portion S2.

The first switch mounting portion S1 is composed, as shown in Fig. 3B, of a square-bottomed depression 21₁ that is cut out, at a particular depth, from the obverse wall face 21_{A} toward the reverse wall face 21_{B} of the first frame 21; and two mounting slots 21₂,- 21₃ that communicate with the square-bottomed depression 21₁, these being provided in the vicinity of the third frame 23. The bottom of the square-bottomed depression 21₁ includes a platform 21_{E} that is higher by a particular height h than the inner bottom plate 25_{A} to be described later. This platform 21_{E} is the same height as a lateral bottom plate 25_{C'} to be described later, and the thick micro MM card 15 is supported in parallel by the platform 21_{E} and the lateral bottom plate 25_{C'}. The mounting slot 21₂ is formed on the obverse wall face 21_{A} of the first frame 21, and has a width that allows insertion of a movable contact terminal 7 to be described later. In the reverse wall face 21_{B} of the first frame 21 there is formed an insertion slot 21_{2'} into which the fitting tab 7_{E} of the movable contact terminal 7 is inserted (see Fig. 4B). Also, the mounting slot 21₃ is formed in the reverse wall face 21_{B} of the first frame 21 and has a width that allows insertion of a fixed contact terminal 8 to be described later.

The second switch mounting portion S2 is formed, as shown in Fig. 4, with a square-bottomed depression 21₄ that sinks to a particular depth from the outer wall face 21_{D} of the first frame 21; and two mounting slots 21₅, 21₆ that communicate with the square-bottomed depression 21₄. A switch member for sensing the open/closed status of the open-close cover 3 is fitted into the second switch mounting portion S2. Further, the front portion of the outer wall face 21_{D} of the first frame 21 bulges outward, while the rear portion thereof that is close to the third frame 23 includes a flat surface 21_{D'} that lies beyond a step difference, being recessed relative to the front portion, and in such flat surface 21_{D'} there is formed a latching protrusion 21_{P} onto which the shield cover 4 latches.

As shown in Figs. 3A and 3B, there is a particular width dimension W_{H4} between the front portion of the inner wall face 21_{C} of the first frame 21 and the inner wall face 22_{C} of the second frame 22, which is opposed to the inner wall face 21c. Near to the first switch mounting portion S1 there is formed an inclined face 21_{C',} and the portion to the rear of such inclined face 21_{C'} (that is, the inmost portion) projects into the card holding_cavity 24, so that at the inmost portion the distance between the inner wall face 21c and the inner wall face 22c of the second frame 22 is contracted, becoming width dimension W_{H3}. If the micro SD or micro MM card 13 or 15 is installed wrongly, the positioning protrusion 13c or 15c of the micro SD or micro MM card 13 or 15 will strike against the inclined face 21_{C'}, blocking any further pushing-in of the card, so that wrong installation is prevented. Conversely, when the micro SD or micro MM card 13 or 15 is installed correctly, the inclined face 21_{C'} will serve as a guide surface that renders the pushing-in smooth. In the front portion of the reverse wall face 21_{B} of the first frame 21 there is formed a mounting slot 21_{T} into which a fitting tab is fitted.

As shown in Fig. 3B, the front portion of the outer wall face 22_{D} of the second frame 22 bulges outward, while the rear portion thereof that is close to the third frame 23 includes a flat surface 22_{D'} that lies beyond a step difference, being recessed relative to the front portion, and in such flat surface 22_{D'} there is formed a latching protrusion 22_{P} onto which the shield cover 4 latches. In the front portion of the outer wall face 22_{D} of there is formed a mounting slot 22_{T} into which a fitting tab fits.

In the obverse wall face 23_{A} and outer wall face 23_{D} of the third frame 23 there are formed, with roughly equal spacings, multiple mounting slots 23₁ of a width that allows installation of the first contact terminals 5, as shown in Fig. 4A. Also, in the inner wall face 23c there is formed an aperture 23₂ of a size that allows insertion of the leading end portion 13a of the narrow micro SD card 13 (see Fig. 3B). More precisely, so as to be of a size that allows the leading end portion 13a of the micro SD card 13 to be inserted, the aperture 23₂ is formed with a longitudinal dimension a little larger than the width W₁ of the micro SD card 13 and with a height a little larger than the thickness t₁ of the micro SD card 13, so that when the leading end portion 13a of the micro SD card 13 is inserted into the aperture, positioning and securing of the micro SD card 13 is effected.

As shown in Figs. 3 and 4A, the first and second frames 21, 22 are coupled via a bottom plate 25 extending from the third frame 23 toward the front portions of the first and second frames 21, 22. More precisely, the reverse wall faces 21_{B}, 22_{B} of the first and second frames 21, 22 are coupled via a bottom plate 25 of a particular thickness. This bottom plate 25 is formed as an inner bottom plate 25_{A} that couples the two frames 21, 22, plus lateral bottom plates 25_{B}, 25_{C} that are drawn out from the inner bottom plate 25_{A} and divided along the first and second frames 21, 22. One lateral bottom plate, 25_{C}, has its portion adjacent to the second frame 22 formed as a lateral bottom plate 25_{C'} that is higher by a particular height h. Also, in the inner bottom plate 25_{A} there are formed, with roughly equal spacings, multiple mounting slots 25₁ into which the second contact terminals 6 are installed.

Thus, the card holding cavity 24 is formed by being surrounded on three sides by the first and second frames 21, 22 plus the third frame 23. As shown in Fig. 3A, the distance W_{H4} between the inner wall faces 21c, 22c of the first and second frames 21, 22, and the distance W_{H3} between the inner wall face 22c and the inclined face 21_{C',} are formed to be a little larger than the widths W₄, W₃ of the micro MM card 15, so that the broad micro MM card 15 can be inserted. Also, the length L_{H1} from the leading end portion to the interior of the aperture 23₂ is formed to be almost equal to the length L₁ of the micro SD card 13, so that the micro SD card 13 can be inserted. Furthermore, the length L_{H2} from the leading end portion to the inner wall face 23c of the third frame 23 is formed to be almost equal to the length L₂ of the micro MM card 15.

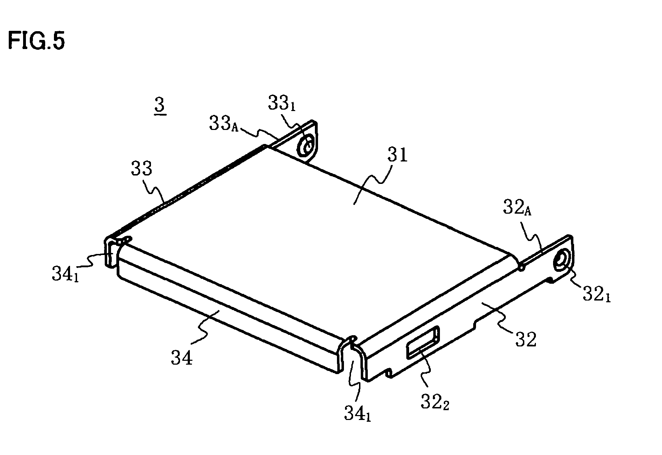

The open-close cover 3, which is for covering the card holding cavity 24 of the housing 2, has, as Fig. 5 shows, a top plate 31 that covers the top opening of the card holding cavity 24; a pair of sideplates 32, 33 that are bent downward from the two side edges of the top plate 31 and cover the side wall faces of the housing 2; and a front cover plate 34 that similarly is bent downward from the front edge of the top plate 31 and covers the front opening of the card holding cavity 24; and is formed via punching of metal plate and bending processing. The front cover plate 34 serves as a sensing member that senses inappropriate installation status of the cards. Gaps 34₁, 34₁ are formed between the two sideplates 32, 33 and the front cover plate 34. The pair of sideplates 32, 33 are extended a certain distance rearward, and on the ends of these extension portions 32_{A}, 33_{A} there are provided pivot protrusions 32₁, 33₁ that each project toward the opposing sideplate surface. These extension portions 32_{A}, 33_{A} possess resilience and, during installation of the open-close cover 3 to the housing 2, will press against and be clasped by the sideplates 42, 43 of the shield cover 4 that is fitted to the side wall faces of the housing 2. Being formed of metallic material, when installed to the housing 2 the open-close cover 3 will act as an electromagnetic shielding member that shields the connector.

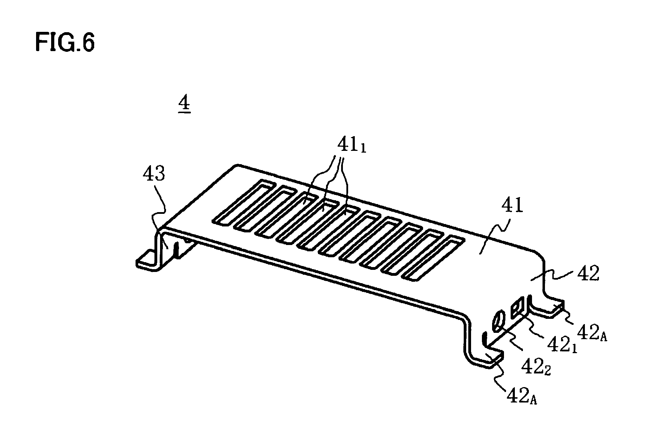

The shield cover 4, which as Fig. 6 shows, is an item that is fitted to the shield cover mounting part ii of the housing 2, has a top plate 41 that covers over such mounting part, and a pair of sideplates 42, 43 that are bent downward from the two ends of the top plate 41; and is formed via punching of metal plate and bending processing. Multiple slits 41₁ are formed with roughly equal spacings in the top plate 41. Such spacings correspond to the first contact terminals 5 that are installed in the housing 2, and the width of the slits 41₁ is a dimension such that the first contact terminals 5 and the shield cover 4 will not contact.

Now the structure of the sideplates 42, 43 will be described. Since the sideplates 42, 43 have the same form, the form of one only, the sideplate 42, will be described. The sideplate 42 is provided with a latching hole 42₁ into which the latching protrusion 21_{P} of the housing 2 latches, a pivoting hole 42₂ in which the pivot protrusion 32₁ of the open-close cover 3 pivots, and a pair of fitting tabs 42_{A}, 42_{A} that fit into a circuit board such as a printed wiring board. Incidentally, the other sideplate 43 is also provided with a similar latching hole, pivoting hole and fitting tabs (omitted from the drawing). The sideplates 42, 43 possess resilience and, during installation to the housing 2, will press against and be clasped by the sidewall faces 21_{D}', 22_{D}' of the housing 2. Also, due to being formed from metallic material, when installed to the housing 2 the shield cover 4 will act as an electromagnetic shielding member that shields off external noise.

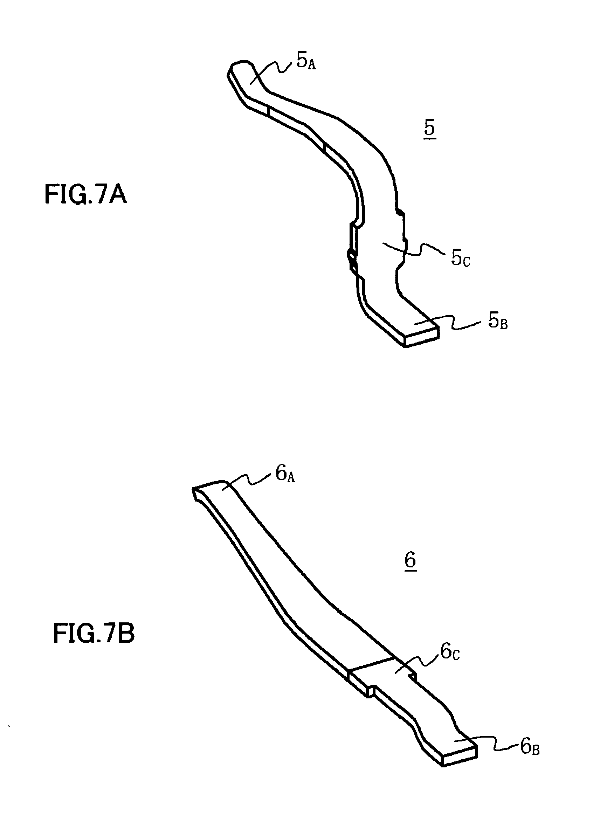

Fig. 7 shows the first and second contact terminals 5 and 6. The first contact terminal 5 has at one end a contact 5_{A} that contacts with the contacts 15d of the micro MM card 15; at the other end a connecting portion 5_{B} that is connected by soldering to a lead wire; and, provided in the vicinity of the connecting portion 5_{B}, a fixing portion 5c for fixing to the housing 2; and is formed as a highly conductive, resilient strip-like metal piece of a particular width, length and thickness. The first contact terminal 5 is fitted to the third frame 23 of the housing 2, and electrically connected to the contacts 15d of the micro MM card 15. The second contact terminal 6 has at one end a contact 6_{A} that is electrically connected to the contacts 13d of the micro SD card 13; at the other end a connecting portion 6_{B} that is connected by soldering to a lead wire; and, provided in the vicinity of the connecting portion 6_{B}, a fixing portion 6c for fixing to the housing 2; and is formed as a highly conductive, resilient strip-like metal piece of a particular width, length and thickness. The second contact terminal 6 is fitted to the inner bottom plate 25_{A} of the housing 2, and connected to the contacts 13d of the micro SD card 13.

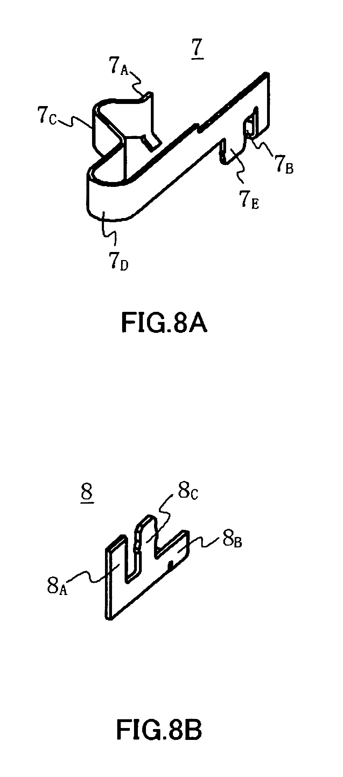

Fig. 8 shows the first switch member that constitutes the first switch means SW₁. This first switch means SW₁ is composed of a movable contact terminal 7 with a movable contact, and a fixed contact terminal 8 with a fixed contact. The movable contact terminal 7 has a movable contact 7_{A} provided at the front tip; a projecting curved portion 7c that is provided at a point somewhat removed from such contact and contacts against the first side edge 13₁ or 15₁ of the card 13 or 15; a curved portion 7_{D} that imparts resilience to the movable contact 7_{A} and projecting curved portion 7_{C}; a connecting portion 7_{B} that is provided at the rear tip and is connected by soldering to a lead wire; and, provided in the vicinity of the connecting portion 7_{B}, a fitting tab 7_{E} that is fixed to the housing 2; and is formed as a highly conductive, resilient strip-like metal piece of a particular width, length and thickness. The projecting curved portion 7c serves as the actuating part for the first switch means SW₁. The fixed contact terminal 8 has a fixed contact 8_{A} provided at the front tip; a connecting portion 8_{B} that is provided at the rear tip and is connected by soldering to a lead wire; and, provided in the vicinity of the connecting portion 8_{B}, a fitting tab 8c that is fixed to the housing 2; and is formed as a highly conductive, resilient strip-like metal piece of a particular width, length and thickness.

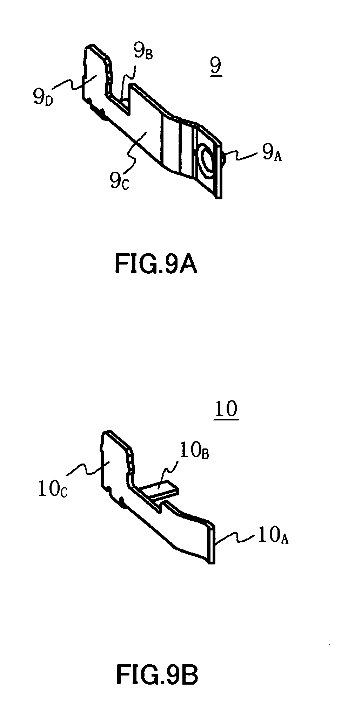

Fig. 9 shows the second switch member that constitutes the second switch means SW₂. This second switch means SW₂ is composed of a movable contact terminal 9 with a movable contact, and a fixed contact terminal 10 with a fixed contact. The movable contact terminal 9 has a latching protrusion 9_{A} provided at the front tip; a movable contact 9c provided in the vicinity of the latching protrusion 9_{A}; a connecting portion 9_{B} that is connected by soldering to a lead wire; and, provided in the vicinity of the connecting portion 9_{B}, a fitting tab 9_{D} that is fixed to the housing 2; and is formed as a highly conductive, resilient strip-like metal piece of a particular width, length and thickness. The latching protrusion 9_{A} contacts against the inner face of the sideplate 32 of the open-close cover 3, and performs the function of causing the movable contact 9c of the movable contact terminal 9 to contact with the fixed contact 10_{A} of the fixed contact terminal 10, as well as that of locking the open-close cover 3. The fixed contact terminal 10 has a fixed contact 10_{A} provided at the front tip; a connecting portion 10c that is connected by soldering to a lead wire; and, provided in the vicinity of the connecting portion 10c, a fitting tab 10_{B} that is fixed to the housing 2; and is formed as a highly conductive, resilient strip-like metal piece of a particular width, length and thickness.

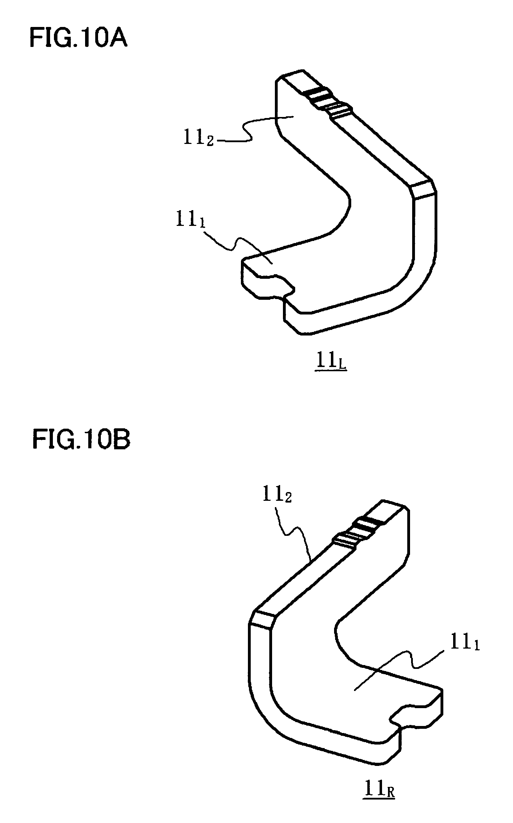

Fig. 10 shows a pair of fitting tabs. These fitting tabs includes a left and a right fitting tab, 11_{L} and 11_{R}, are mounted to the bottom of the housing 2, and are for fixing the connector 1 to a circuit board such as a printed wiring board. The left fitting tab 11_{L} has a housing fixing portion 11₁ that is inserted into installation holes in the housing 2, and a circuit board fixing portion 11₂ that is drawn out from one end of the housing fixing portion 11₁ and is fixed to the circuit board by solder; and is formed as an approximately L-shaped metallic piece. The other, right fitting tab 11_{R} likewise has a housing fixing portion 11₁ and a circuit board fixing portion 11₂. However, the left and right fitting tabs 11_{L}, 11_{R} differ in the direction in which the circuit board fixing portion 11₂ is drawn out relative to the housing fixing portion 11₁.

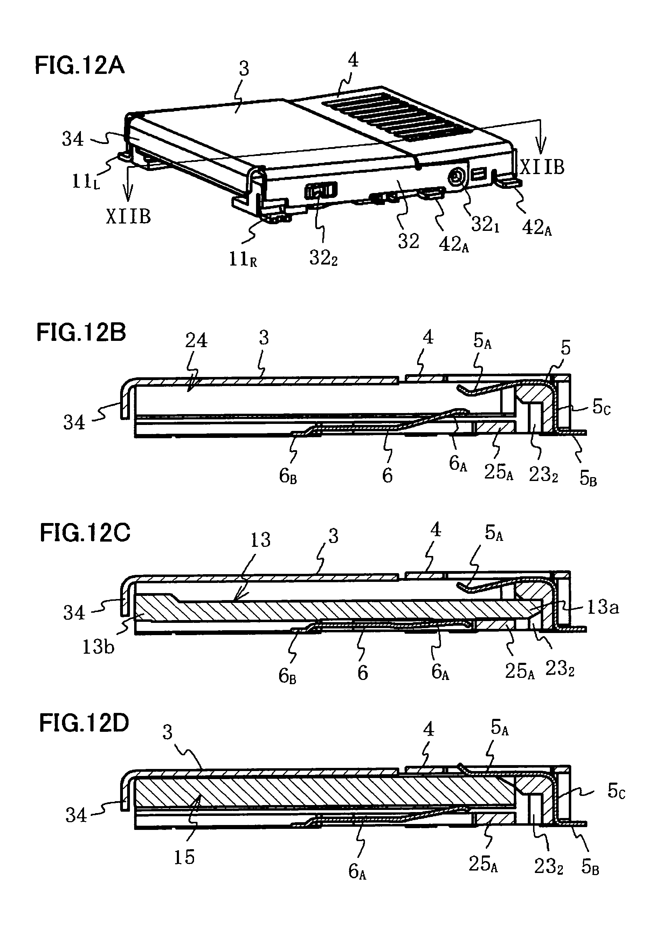

Next will be described, with reference to Figs, 1 to 12, the procedure for assembling a connector 1 that employs the foregoing parts. First, the first and second contact terminals 5, 6 shown in Fig. 7 are fitted to the housing 2 shown in Figs. 3 and 4. The first contact terminals 5 are fitted by press-fitting and securing the fixing portions 5c thereof into the mounting slots 23₁ in the third frame 23 of the housing 2. As a result of such fitting, the contacts 5_{A} of the first contact terminals 5 will be positioned inside the card housing cavity 24, while the connecting portions 5_{B} thereof will be in a state such as to project to the rear of the third frame 23, as shown in Fig. 12B. The second contact terminals 6 are fitted into the mounting slots 25₁ in the inner bottom plate 25_{A}. The second contact terminals 6 are fitted by passing the fixing portions 6c thereof along the back surface of the inner bottom plate 25_{A}, and insert-molding the fixing portions 6c through the mounting slots 25₁ so as to point upward and be secured. As a result of such fitting, the contacts 6_{A} of the second contact terminals 6 will be positioned inside the card housing cavity 24, while the connecting portions 6_{B} thereof will be in a state such as to project to the lower surface of the inner bottom plate 25_{A}, as shown in Fig. 12B.

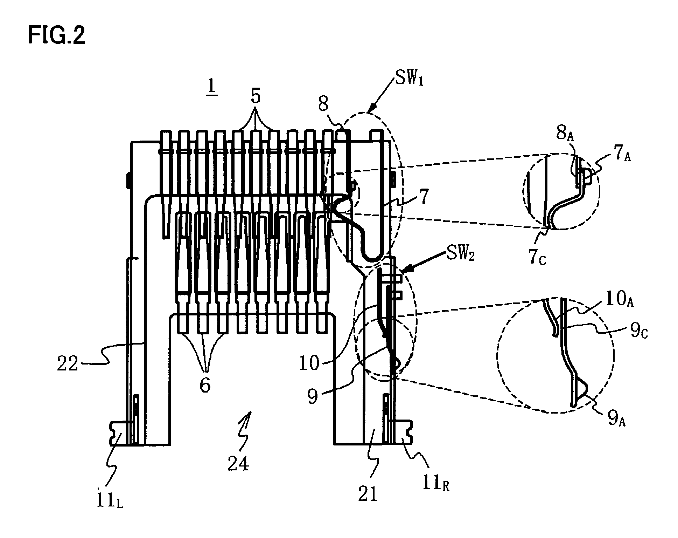

Following that, the first and second switch members shown in Figs. 8 and 9 are fitted to the first and second switch-mounting portions S1, S2 of the housing 2. To fit the first switch member to the first switch mounting portion S1, the movable contact terminal 7 and the fixed contact terminal 8 are inserted into and fixed in mounting slot 21₂ and mounting slot 21₃ respectively. Likewise, to fit the second switch member to the second switch mounting portion S2, the movable contact terminal 9 and the fixed contact terminal 10 are inserted into and fixed in mounting slot 21₅ and mounting slot 21₆ respectively. Such fitting of the first and second switch members to the first and second switch mounting portions S1, S2 results in the formation of the first and second switch means SW₁ and SW₂ shown in Fig. 2. More precisely, the first switch means SW₁, is formed when the movable contact 7_{A} of the movable contact terminal 7 contacts with the fixed contact 8_{A} of the fixed contact terminal 8, and the projecting curved portion 7c projects inside the card holding cavity 24; while the second switch means SW₂, is formed when the movable contact 9c of the movable contact terminal 9 faces, but is separated, i.e. disconnected from, the fixed contact 10_{A} of the fixed contact terminal 10, and the latching protrusion 9_{A} projects outward.

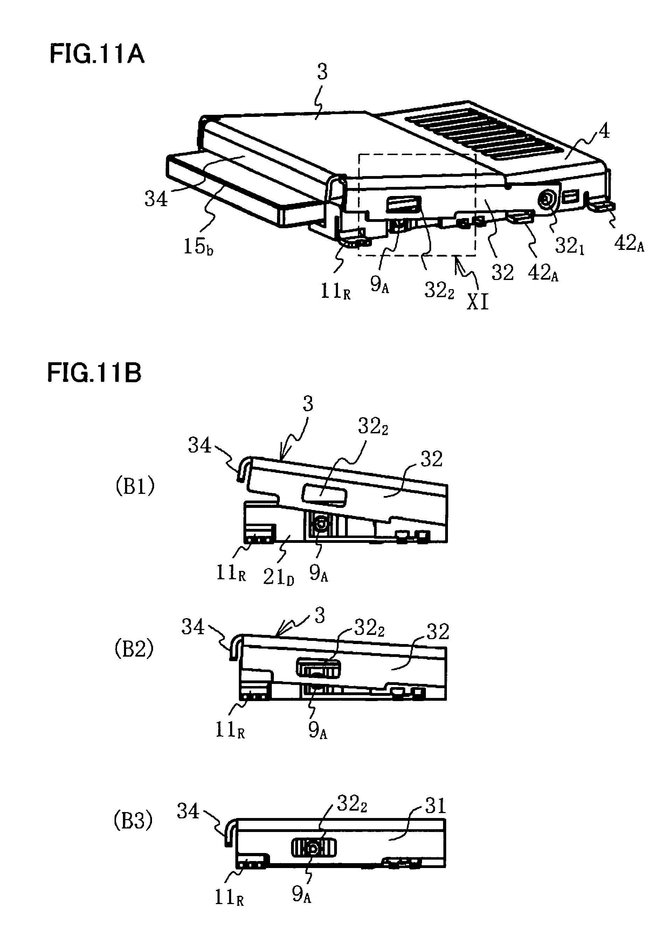

Next, the shield cover 4 shown in Fig. 6 is fitted to the shield cover mounting part ii at the rear of the housing 2. The shield cover 4 is fitted by pushing outward the two opposed sideplates 42, 42, against the resilience thereof, so that the distance therebetween is widened; bringing the two sideplates into contact with the sidewalls 21_{D'}, 22_{D'} of the housing 2, and mating the mating holes 42₁, 43₁ of the two sideplates 42, 43 to the latching protrusions 21_{P}, 22_{P} on the housing 2, so as to effect fixing. After that, the open-close cover 3 shown in Fig. 5 is fitted to the shield cover 4. To fit the open-close cover 3, the extension portions 32_{A}, 33_{A} of the two sideplates of the open-close cover 3 are pushed outward, against the resilience of the two sideplates, and fitting the pivot protrusions 32₁, 33₁ provided in the extension portions into the pivoting holes 42₂ in the shield cover 4 so as to be secured but freely rotatable therein. With the open-close cover 3 thus fitted to the housing 2, the open-close cover 3 can be opened/closed as desired, and when the open-close cover 3 is open, it is possible to examine the interior of the card holding cavity 24, as shown in Fig. 11. After that, the left and right fitting tabs 11_{L}, 11_{R} shown in Fig. 10 are fitted into the mounting slots 21_{T}, 22_{T} in the bottom of the housing 2, whereupon assembly of the connector 1 is complete. The assembled connector 1 is used by being fitted to a printed wiring board or the like, which is not shown in the drawings.

Next will be described, with reference to Figs. 1, 2, 11 and 13, the installation of the micro SD and micro MM cards 13, 15 into the card holding cavity 24, and the process of closing the open-close cover 3. First, installation of one of these card types, the micro MM card 15, into the card holding cavity 24 will be described below.

To begin with, before installation of the micro MM card 15, the open-close cover 3 is opened. Opening the open-close cover 3 exposes the interior of the card holding cavity 24, so that the interior is observable. At this point, a check is made by comparing the contacts 15d and positioning protrusion 15c of the micro MM card 15 to be inserted with the array status and hole shapes of the first contact terminals 5 inside the card holding cavity 24. Based on the result of such check, the micro MM card 15 shown in Fig. 1 is oriented with the contacts 15d on the upward face. Should the obverse and reverse faces of the micro MM card be the wrong way around, they will be changed so that the contacts 15d point upward. Next, the micro MM card 15's first side edge 15₁, where the positioning protrusion 15c is provided, and reverse face, are brought into contact with the inner wall face 21c of the first frame 21 and the lateral bottom plate 25_{B'} of the card holding cavity 24, respectively, while at the same time the second side edge 15₂ is brought into contact with the lateral bottom plate 25c and inner wall face 22c of the second frame 22, and the card is inserted. In such insertion process, as the micro MM card 15's leading end portion 15a approaches the aperture 23₂, the micro MM card 15 runs onto the platform 21_{E}, and the micro MM card 15's first side edge 15₁ contacts against the projecting curved portion 7c of the movable contact terminal 7. As a result, the projecting curved portion 7c of the movable contact terminal 7 is pushed outward, the movable contact 7_{A} of the movable contact terminal 7 becomes detached from the fixed contact 8_{A} of the fixed contact terminal 8, and the first switch means SW₁ is turned OFF. The fact that the micro MM card 15 has been installed can be sensed electrically via such turning OFF of the first switch means SW₁ (see Fig. 2). Thus, when installing the card, it is possible, before insertion, to make a check by comparing the contacts 15d and positioning protrusion 15c of the micro MM card 15 to be inserted with the array status and hole shapes of the first contact terminals 5 inside the card holding cavity 24; so that the card can be installed in an extremely simple manner without any misinstallation.

After the micro MM card 15 has been inserted into the card holding cavity 24, the open-close cover 3 is closed. If the micro MM card 15 has not been inserted up to the correct position at the time of such closing manipulation, the trailing end portion 15b of the micro MM card 15 will spring out to the exterior through the front opening of the card holding cavity 24, as shown in Fig. 11A. As a result, the front cover plate 34 of the open-close cover 3 will strike against the sprung-out portion and it will not be possible to close the open-close cover 3. Hence, incomplete installation of the micro MM card 15 can be sensed in a simple manner via such colliding of the open-close cover 3 with the micro MM card 15. Subsequently, when the micro MM card 15 is inserted up to the regular position, it becomes possible to close the open-close cover 3, and the open-close cover 3 is closed. With open-close cover 3 closed, the front cover plate 34 covers the front opening, so that entry of dust or other foreign matter is prevented.

In tandem with the open-close cover 3 closing manipulation, the second switch means SW₂ executes a series of OFF-ON-OFF operations. More precisely, prior to closing of the open-close cover 3, the second switch means SW₂ is in the OFF state (see (B1) in Fig. 11B). Then in the initial stage of closing of the open-close cover 3, the inner wall face of the open-close cover 3's sideplate 32 contacts against the latching protrusion 9_{A} of the second switch means SW₂, the latching protrusion 9_{A} is pushed inward, and the second switch means SW₂ switches from OFF to ON (see (B2) in Fig. 11B). At the same time, the latching protrusion 9_{A} enters into the mating hole 32₂ provided in the sideplates 32, 33 of the open-close cover 3, locking the open-close cover 3 in the closed state (see (B3) in Fig. 11B).

Next is described the installation of the micro SD card 13. Before the micro SD card 13 is installed inside the card holding cavity 24, the open-close cover 3 is opened. Since the interior of the card holding cavity 24 is exposed when the open-close cover 3 is opened, installation of the micro SD card 13 is carried out with roughly the same process as for installation of the micro MM card 15. More precisely, the micro SD card 13 is inserted by bringing the side edge 13₁ (first side edge), on which the positioning protrusion 13c is provided, into contact with the inner wall face 21c of the first frame 21, and the reverse face into contact with the lateral bottom plate 25_{B} of the card holding cavity 24, and at the same time bringing the second side edge 13₂ into contact with the lateral bottom plate 25c and inner wall face 22c of the second frame 22. Through such insertion, the micro SD card 13's leading end portion 13a enters into the aperture 23₂ and is thereby positioned and secured.

At the same time, the micro SD card 13's first side edge 13₁ contacts against and pushes outward the projecting curved portion 7c of the movable contact terminal 7, so that the movable contact 7_{A} of the movable contact terminal 7 is detached from the fixed contact 8_{A} of the fixed contact terminal 8 and the first switch means SW₁ is turned OFF. The fact that the micro SD card 13 has been installed can be sensed electrically via such turning OFF of the first switch means SW₁. After the micro SD card 13 has been inserted inside the card holding cavity 24, the open-close cover 3 is closed. Such closing manipulation is carried out with the same process as for installation of the micro MM card 15.

The card connector 1, although described in the foregoing embodiment as being for use with a micro SD card 13 and a micro MM card 15, is not limited to being used with such cards.

## Claims

1. A card connector comprising:
a connector housing constituted of electrical insulators and capable of housing cards inside a bottomed card holding cavity which is formed therein so as to be enclosed on three sides by an opposed pair of first and second frames and a third frame that links the end portions of the first and second frames, and so as to be open at the front and top;
contact terminals that are deposed inside the connector housing's card holding cavity; and
an open-close cover that covers the open portions of the connector housing's card holding cavity;
the open-close cover having, at the front thereof where the card is installed, a sensing member that senses the installation status of the card; the rear of the open-close cover being rotatably pivoted on the first and second frames; and after a card is installed inside the card holding cavity, the card's installation status being sensed by closing the open-close cover and positioning the sensing member of the open-close cover at the rear end portion of the card.

2. The card connector according to claim 1, wherein the card holding cavity is formed in a shape that permits cards of differing size and thickness to be housed therein, and the contact terminals that contact with the contacts of such cards are installed inside the card housing cavity.

3. The card connector according to claim 2, wherein the card holding cavity is formed in a shape that permits a first and a second card type of differing size and thickness to be housed therein, and the contact terminals are composed of first and second contact terminals that are provided inside the card holding cavity and contact with the contacts of the first and second card types respectively.

4. The card connector according to claim 3, wherein the first contact terminals are fixed to the third frame of the connector housing, and the second contact terminals are fixed to the bottom of the connector housing.

5. The card connector according to claim 1, wherein the open-close cover is formed from metal plates comprising a pair of first and second sideplates that cover the outer side surfaces of the first and second frame, a top plate that links the top edges of the sideplates and covers the upper opening of the card holding cavity, and a front cover plate that covers the front opening of the card holding cavity, with the front cover plate serving as the sensing member.

6. The card connector according to claim 1, wherein either the first or the second frame of the connector housing is provided with a first switch means that senses the installation status of the card, and with a second switch means that senses the open/closed status of the open-close cover.

7. The card connector according to claim 6, wherein the first switch means is composed of a first fixed contact terminal having a fixed contact, and a first movable contact terminal having a movable contact that contacts and separates from the fixed contact, together with an actuating part that separates the movable contact from the fixed contact as a card is installed; and the second switch means is composed of a second fixed contact terminal having a fixed contact, and a second movable contact terminal having a movable contact that contacts and separates from the fixed contact, together with an actuating protrusion that separates the movable contact from the fixed contact in interlock with opening/closing manipulation of the open-close cover.

8. The card connector according to claim 7, wherein the actuating protrusion of the second movable contact terminal causes, in interlock with closing manipulation of the open-close cover, the second switch means to execute a series of OFF-ON-OFF operations; in the final OFF state, the actuating protrusion is latched into a latching hole provided in the frame, thereby locking the open-close cover in the closed state.

9. The card connector according to claim 3, wherein an aperture portion for insertion of the leading end of the first card type, which is long compared to the second card type, is formed in the third frame; so that as a first card type is installed, the leading end of the first card type is inserted into such aperture and thereby is positioned and secured.
